# EUROPEAN PATENT APPLICATION

(11) **EP 4 435 653 A1**
(43) Date of publication of application: **25.09.2024**
(21) Application number: 22895439.2
(22) Date of filing: 02.11.2022
(51) Int. Cl.: G06F 21/62, G06F 21/31, G06F 21/60

(54) **DATA PROCESSING DEVICE, DATA PROCESSING METHOD, AND COMPUTER-READABLE RECORDING MEDIUM**

(30) Priority: 16.11.2021 JP 2021186328
(71) Applicant: NEC Solution Innovators, Ltd., Koto-ku, Tokyo 136-8627 (JP)
(72) Inventor: SHOJI, Ryo, Tokyo 136-8627 (JP); SAKAMOTO, Hisashi, Tokyo 136-8627 (JP)
(74) Representative: Betten & Resch
(86) International application number: PCT/JP2022/041021
(87) International publication number: WO 2023/090157

(57) **Abstract**

A data processing apparatus 20 includes: an authentication code acquisition unit 1 that acquires, when login authentication of a user who has performed a login operation succeeds, an authentication code associated with the user; a code management unit 2 that manages an identification code for identifying the user for which the login authentication succeeded and the authentication code in association with each other; a determination unit 3 that determines, when a request for access to data is made, based on whether there is an authentication code corresponding to the identification code of the user who made the request for access, whether the user corresponding to the authentication code has authorization to use the data; and a processing permission unit 4 that permits, if the user has been granted use authorization, processing of the data by the user.

## Description

### TECHNICAL FIELD

The present invention relates to a data processing apparatus, a data processing method, and a computer readable recording medium that includes a program for realizing the apparatus and method recorded thereon.

### BACKGROUND ART

Conventionally, there are systems that enable data stored in a storage to be accessed from a plurality of terminal devices. In such systems, in order to prevent unauthorized use of the data, it is desired to enhance data security by data encryption or the like. For example, Patent Document 1 discloses a system that enhances data security.

The system disclosed in Patent Document 1 includes a user terminal and a key generation and management apparatus. The key generation and management apparatus stores encryption keys and authentication information in association with each other. The key generation and management apparatus then performs authentication based on authentication information transmitted from the user terminal. When authentication succeeds, the key generation and management apparatus transmits an encryption key to the user terminal. The user terminal temporarily stores the received encryption key. The user terminal executes a specific application and uses the encryption key on the application to decrypt stored encrypted data. The user terminal then deletes the received encryption key under a predetermined condition such as a logout operation having been performed on the specific application.

### LIST OF RELATED ART DOCUMENT

### PATENT DOCUMENT

Patent Document 1: Japanese Patent Laid-Open Publication No. 2014-149806

### SUMMARY OF INVENTION

### PROBLEMS TO BE SOLVED BY THE INVENTION

However, even in the case where data is protected such as in the system disclosed in Patent Document 1, when the system is configured such that data access authorization can be changed by an administrator, there is a possibility that data access not intended by the user who uses the data may take place.

In addition, in the system disclosed in Patent Document 1, the encrypted data is decrypted by a specific application. Thus, in order to protect the data, it is necessary to prepare and execute such a specific application. In the case of protecting the data by a specific application, there is the risk of the protected data being accessed by a third party without data use authorization using the specific application. Therefore, it is desired to protect the data in a manner not reliant on an application.

Further, in the system disclosed in Patent Document 1, even though the encrypted is deleted under a predetermined condition, there is a possibility that the decrypted data will remain as plain text. In this case, the data can be accessed by a third party and thus is not sufficiently protected.

In view of this, an example object of the present disclosure is to enable processing of data only by a user with data use authorization, without being reliant on an application.

### MEANS FOR SOLVING THE PROBLEMS

In order to achieve the above-described object, a data processing apparatus according to an example aspect of the present disclosure includes:
an authentication code acquisition unit that acquires, when login authentication of a user who has performed a login operation succeeds, an authentication code associated with the user;
a code management unit that manages an identification code for identifying the user for which the login authentication succeeded and the authentication code in association with each other;
a determination unit that determines, when a request for access to data is made, based on whether there is an authentication code corresponding to the identification code of the user who made the request for access, whether the user corresponding to the authentication code has authorization to use the data; and
a processing permission unit that permits, if the user has been granted use authorization, processing of the data by the user.

In order to achieve the above-described object, a data processing method according to an example aspect of the present disclosure includes:
a step of acquiring, when login authentication of a user who has performed a login operation succeeds, an authentication code associated with the user;
a step of managing an identification code for identifying the user for which the login authentication succeeded and the authentication code in association with each other;
a step of determining, when a request for access to data is made, based on whether there is an authentication code corresponding to the identification code of the user who made the request for access, whether the user corresponding to the authentication code has authorization to use the data; and
a step of permitting, if the user has been granted use authorization, processing of the data by the user.

In order to achieve the above-described object, a computer readable recording medium according to an example aspect of the present disclosure is a computer readable recording medium that includes recorded thereon a program,
the program including instructions that cause the computer to carry out:
a step of acquiring, when login authentication of a user who has performed a login operation succeeds, an authentication code associated with the user;
a step of managing an identification code for identifying the user for which the login authentication succeeded and the authentication code in association with each other;
a step of determining, when a request for access to data is made, based on whether there is an authentication code corresponding to the identification code of the user who made the request for access, whether the user corresponding to the authentication code has authorization to use the data; and
a step of permitting, if the user has been granted use authorization, processing of the data by the user.

### ADVANTAGEOUS EFFECTS OF THE INVENTION

As described above, according to the present disclosure, it is possible to process of data only by a user with data use authorization, without being reliant on an application.

### BRIEF DESCRIPTION OF THE DRAWINGS

FIG. 1 is a configuration diagram illustrating a schematic configuration of a data processing apparatus in the example embodiment.
FIG. 2 is a block diagram illustrating a configuration of a data processing system including the data processing apparatus.
FIG. 3 is a diagram illustrating an example of a data table in which users and authentication codes are associated with each other.
FIG. 4 is a diagram illustrating an example of data table in which the identification codes and the authentication codes are associated with each other.
FIG. 5 is a diagram illustrating an example of a data table in which data names, decryption keys, and login names of users who can use the data are associated with one another.
FIG. 6 is a flowchart illustrating operations of the data processing apparatus according to the example embodiment at the time of execution of the login processing.
FIG. 7 is a flowchart illustrating operations of the data processing apparatus in the example embodiment at the time of execution of an application program.
FIG. 8 is a block diagram illustrating an example of a computer that realizes the data processing apparatus according to the example embodiment.

### EXAMPLE EMBODIMENTS

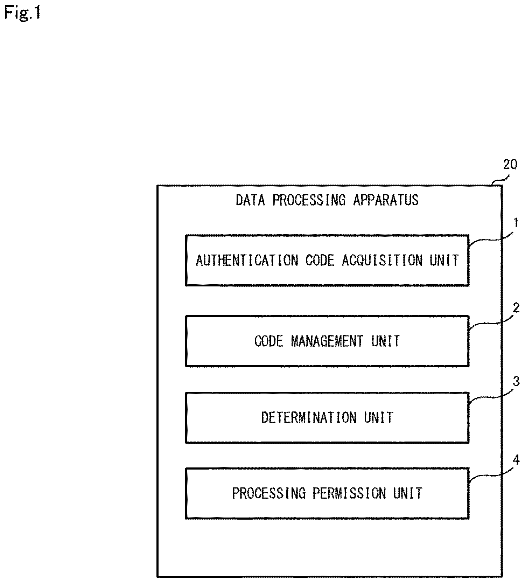

Hereinafter, a data processing apparatus, a data processing method, and a program according to an example embodiment will be described with reference to FIGS. 1 to 7.

### [Apparatus Configuration]

First, a schematic configuration of a data processing apparatus in an example embodiment will be described with reference to FIG. 1. FIG. 1 is a configuration diagram illustrating a schematic configuration of a data processing apparatus 20 in the example embodiment.

The data processing apparatus 20 is an apparatus that permits processing of data by a user who has authorization to use the data. As illustrated in FIG. 1, the data processing apparatus 20 includes an authentication code acquisition unit 1, a code management unit 2, a determination unit 3, and a processing permission unit 4.

When login authentication of a user who has performed a login operation succeeds, the authentication code acquisition unit 1 acquires an authentication code associated with the user.

The code management unit 2 manages identification codes for identifying users whose login authentication succeeded and authentication codes in association with each other.

When a user requests data access, the determination unit 3 determines whether there is an authentication code corresponding to the identification code of the user who requested access. If it is determined that there is such an authentication code, the determination unit 3 grants authorization to use the data to the user corresponding to the authentication code.

When use authorization has been granted to the user, the processing permission unit 4 permits the user to process the data.

As described above, each time login authentication of a user who has performed a login operation succeeds, the data processing apparatus 20 in the present example embodiment acquires the authentication code set for the user. The data processing apparatus 20 then permits the user to use the data on the condition that the authentication code set for the user can be acquired. Thus, even in the case where a third party uses the data processing apparatus 20, if the authentication code cannot be acquired, that third party is treated as not having authorization to use the data, and cannot process the data with the data processing apparatus 20. That is, only a user with authorization to use the data can process the data, and even if an encryption key is left without being deleted, for example, a third party cannot handle the data.

In the data processing apparatus 20 according to the present example embodiment, rather than an application executed on the apparatus permitting use of data, the data processing apparatus 20 permits use of data if the user who has logged in has authorization to use the data. That is, by using the data processing apparatus 20, the data can be safely protected for each user who logs in, without having to prepare an application for data protection for each piece of data to be used.

For example, assume that there is data X that only a user A is authorized to use and data Y that only a user B is authorized to use, and that two applications P and Q that perform data processing are executed on the data processing apparatus 20. In this case, the user A who has logged into the data processing apparatus 20 can use the data X using the application P but cannot use the data Y Also, the user A can use the data X using the application Q but cannot use the data Y On the other hand, the user B who has logged into the data processing apparatus 20 can use the data Y using the application P but cannot use the data X. Also, the user B can use the data Y using the application Q but cannot use the data X. In this manner, the data processing apparatus 20 enables data protection that is not reliant on an application.

Further, the data processing apparatus 20 according to the present example embodiment permits processing of data in the case of a user who has use authorization, each time data access is performed. Accordingly, if a third party without data use authorization accesses the data that has been accessed once by a user with data use authorization, the third party cannot process the data, so that sufficient data protection can be provided.

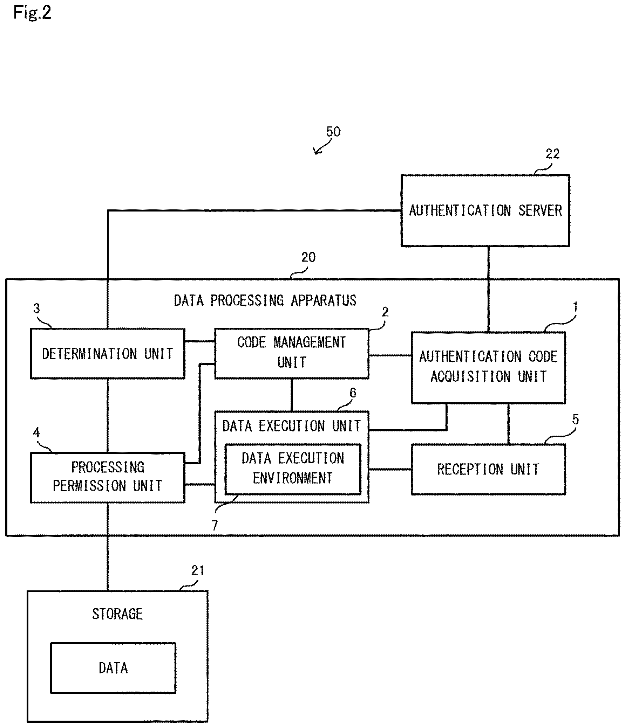

Subsequently, a configuration and functions of the data processing apparatus 20 according to the example embodiment will be specifically described with reference to FIGS. 2 to 6. Hereinafter, a data processing system including the data processing apparatus 20 will be described.

FIG. 2 is a block diagram illustrating a configuration of a data processing system 50 including the data processing apparatus 20. As illustrated in FIG. 2, the data processing apparatus 20 according to the example embodiment is connected to a storage 21 and an authentication server 22 so as to be capable of data communication, and constructs the data processing system 50 together with these devices. In the example of FIG. 2, only one data processing apparatus 20 is illustrated, but the data processing system 50 may have a plurality of data processing apparatuses 20.

The storage 21 is a device that includes a hard disk drive (HDD), a solid-state drive (SSD), and the like, and stores data to be handled by the data processing apparatus 20. The storage 21 is accessed by the data processing apparatus 20 in a wired or wireless manner. Data stored in the storage 21 is transferred to and from the data processing apparatus 20. Data stored in the storage 21 is encrypted. Data is encrypted with a different key for each user who created the data.

The authentication server 22 is a server device that performs data communication with the data processing apparatus 20 in a wired or wireless manner. When a user performs a login operation by inputting a login name and a password or biological information to the data processing apparatus 20, the authentication server 22 verifies the input login information with preregistered authentication information to authenticate the user who performed the login operation. When login authentication of the user succeeds, the authentication server 22 generates an authentication code for the user and transmits the authentication code to the data processing apparatus 20. The authentication code is a character string (token) including a digital signature. The authentication codes are used to manage users who perform data processing within the data processing apparatus 20.

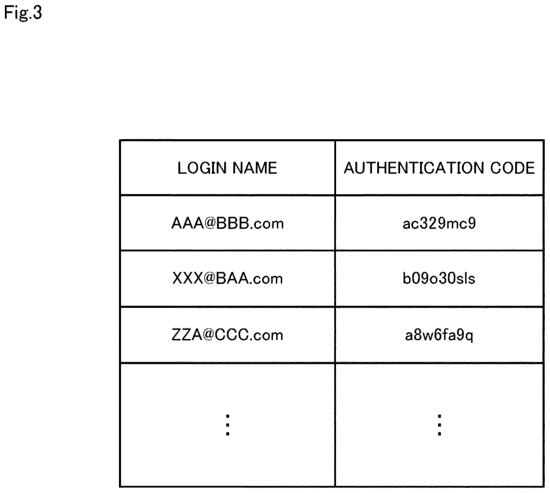

Upon an authentication code being generated as described above, the authentication server 22 manages the generated authentication code in association with the user (login name), as illustrated in FIG. 3. FIG. 3 is a diagram illustrating an example of a data table in which users and authentication codes are associated with each other.

The data table illustrated in FIG. 3 associates the login names of the users with the authentication codes. As will be described later, each login name is a character string that uniquely specifies a user, such as an e-mail address, and is input by the user to log into the data processing apparatus 20. The authentication server 22 stores the authentication code in a memory or the like in association the login name.

Note that the authentication server 22 can also generate an authentication code every time a predetermined period elapses, and associate the generated authentication code with a user at a timing at which login authentication succeeds. The authentication server 22 can also generate the authentication code again when a certain period has elapsed from when the authentication code was generated. Due to the authentication server 22 periodically generating the authentication code, it is possible to enhance the security of data as compared to the case where the same authentication code is continually used.

Returning to FIG. 2, the data processing apparatus 20, as illustrated in FIG. 2, further includes a reception unit 5 and a data execution unit 6, in addition to the authentication code acquisition unit 1, the code management unit 2, the determination unit 3, and the processing permission unit 4 described above with reference to FIG. 1.

The data execution unit 6 constructs a data execution environment 7 for executing application programs. Specifically, the data execution environment 7 is constructed on an operating system (OS) that constitutes the data processing apparatus 20, for example. In the example embodiment, data stored in the storage 21 is encrypted. Thus, in the data execution environment 7, the application programs use decrypted data. Decryption of data will be described later.

When login authentication of a user succeeds in the authentication server 22, the data execution unit 6 permits the user to log into the data execution environment 7, and sets a unique identification code for use in the data execution environment 7. Then, upon the identification code being set by the data execution unit 6, the authentication code acquisition unit 1 acquires the identification code and passes the acquired identification code to the code management unit 2.

The identification code is a user ID for the data execution unit 6 to specify the user in the data execution environment 7. The identification code consists of letters, numbers, or a character string that uses letters and numbers. The data execution unit 6 may set a different identification code for a user each time the user logs into the data processing apparatus 20, or may always set the same identification code for the same user.

The data execution unit 6 sends a request to access stored data to the storage 21 in response to a user operation received by the reception unit 5. For example, the data execution unit 6 outputs a signal including identification information of the data to which access is requested. The identification information of the data is an identifier (data name) such as the filename of the data, for example.

The reception unit 5 receives various operations performed by the user, such as an operation for logging into the data processing apparatus 20 and an operation for accessing data, for example. In the login operation, for example, when a user inputs authentication information such as a login name and a password, the reception unit 5 receives the input information. The login name may be an e-mail address, a character string that uniquely specifies the user, or the like. Instead of a login name and a password, the reception unit 5 may be configured to read biological information of the user. In the data access operation, the user inputs the identifier of the data to be processed, for example, the filename.

When the reception unit 5 receives the login operation by the user, the authentication code acquisition unit 1 transmits the authentication information input by the login operation to the authentication server 22. As described above, the authentication server 22 determines whether the received authentication information matches authentication information managed as a user who has authorization to use the data processing apparatus 20. If the two pieces of authentication information match each other, the authentication server 22 authenticates the user who performed the login operation. When login succeeds, the authentication server 22 sets an authentication code for the user who has logged in and transmits the set authentication code to the data processing apparatus 20.

The authentication code acquisition unit 1 acquires the authentication code transmitted from the authentication server 22. In the example of FIG. 2, login authentication is performed by the external authentication server 22. However, if the data processing apparatus 20 includes the function of an authentication server, login authentication may be performed in the data processing apparatus 20.

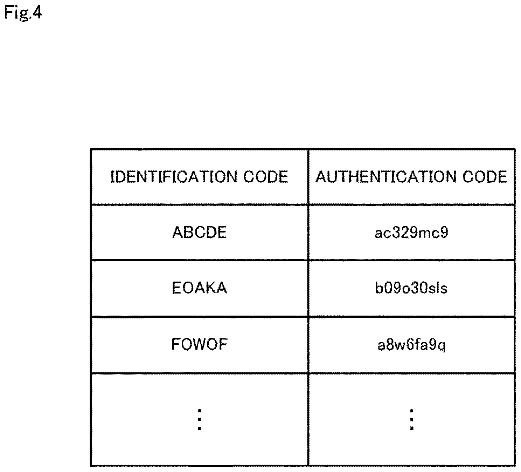

Upon acquisition of the identification code from the data execution unit 6, the code management unit 2 manages the acquired identification code in association with the authentication code acquired by the authentication code acquisition unit 1. The code management unit 2 performs code management using a data table illustrated in FIG. 4 in which authentication codes and identification codes are associated with each other, for example. FIG. 4 is a diagram illustrating an example of data table in which the identification codes and the authentication codes are associated with each other.

Upon the identification code being set, the user can execute the application program in the data execution environment 7 based on authorization of the identification code. In this case, the application program reads out data stored in the storage 21. At the time of reading out the data, the application program executes a system call provided by the OS and adds the identification code to the system call.

In the example embodiment, the processing permission unit 4 hooks the system call executed by the application program, specifies the identification code related to execution of the system call, and passes the specified identification code to the code management unit 2. In response, the code management unit 2 specifies the authentication code corresponding to the received identification code, from the data table that is managed, and passes the specified authentication code to the processing permission unit 4. As a result, the processing permission unit 4 can acquire the corresponding authentication code.

In addition, the processing permission unit 4 acquires the data name of the data to be processed by the application program (specifically, an identifier of the location of the data) from the hooked system call. Then, the processing permission unit 4 passes the acquired data name and authentication code to the determination unit 3.

In the example embodiment, the determination unit 3 determines whether the user who executed the application program in the data execution environment 7 has authorization to use the data. Specifically, when the data name and the authentication code are received from the processing permission unit 4, the determination unit 3 first sends the authentication code to the authentication server 22. In response, the authentication server 22 sends the login name associated with the received authentication code. The determination unit 3 specifies the login name of the user who executed the application program.

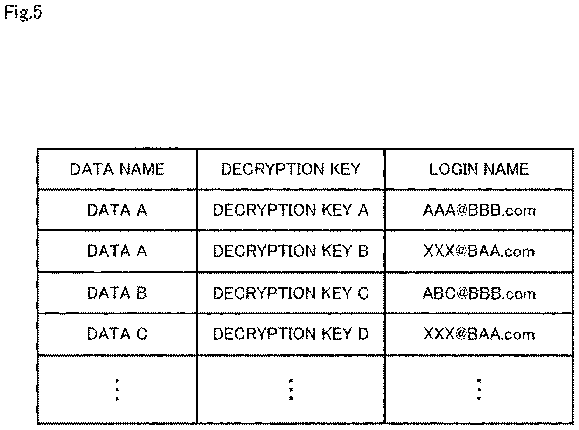

In the example embodiment, the determination unit 3 manages, for each piece of data, a decryption key for decrypting the data and the user who can use the data corresponding to the decryption key in association with each other. FIG. 5 is a diagram illustrating an example of a data table in which data names, decryption keys, and login names of users who can use the data are associated with one another. As illustrated in FIG. 5, the determination unit 3 manages the names (identification information) of the data, the decryption keys of the data, and the users (login names) with authorization to use the data in association with one another.

Upon specifying the login name as described above, the determination unit 3 compares the data name corresponding to the specified login name with the data name received from the processing permission unit 4. If the result of the comparison indicates that the two data names match each other, the determination unit 3 determines that the user who executed the application program has authorization to use the data. In addition, in this case, the determination unit 3 sends the corresponding decryption key to the processing permission unit 4. The processing permission unit 4 decrypts the data with the decryption key and permits the user to process the data. On the other hand, if the two data names do not match each other, the determination unit 3 determines that the user who executed the application program does not have authorization to use the data.

The decryption keys for decrypting data may be separately managed by a key management unit configured to manage keys. The keys necessary for encryption and decryption may be the same key (common key) or may be different keys (private key and public key). In the case of acquiring decryption keys from the outside, after decryption of the data, the processing permission unit 4 preferably deletes the acquired decryption keys.

### [Apparatus operations]

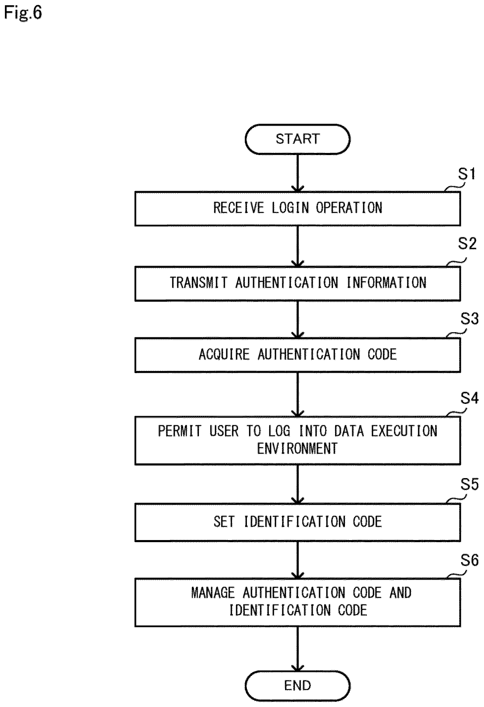

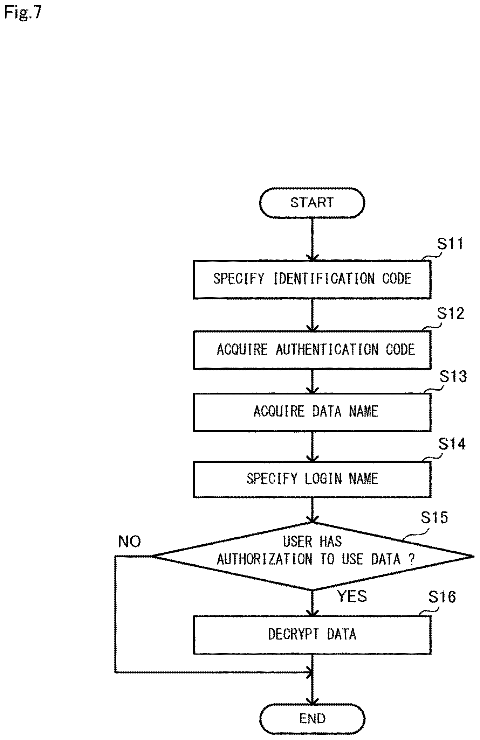

Next, operations of the data processing apparatus 20 in the example embodiment will be described with reference to FIGS. 6 and 7. In the following description, FIGS. 1 to 5 will also be referred to as appropriate. In the example embodiment, the data processing apparatus 20 is operated to implement a data processing method. Therefore, description of the data processing method according to the example embodiment will be replaced by the following description of operations by the data processing apparatus 20.

Login processing by the data processing apparatus 20 will be described with reference to FIG. 6. FIG. 6 is a flowchart illustrating operations of the data processing apparatus according to the example embodiment at the time of execution of the login processing.

As illustrated in FIG. 6, first, in the data processing apparatus 20, when a login operation is performed by a user, the reception unit 5 receives the login operation (step S1). Upon reception of the login operation, the reception unit 5 passes the authentication information input by the login operation to the authentication code acquisition unit 1. Next, the authentication code acquisition unit 1 transmits the input authentication information to the authentication server 22 to request login authentication (step S2).

Upon receipt of the authentication information, the authentication server 22 executes authentication processing. When login authentication succeeds, the authentication server 22 generates an authentication code and associates the generated authentication code with the user (login name) who has logged in. In addition, when login authentication succeeds, the authentication server 22 transmits the authentication code associated with the user who has logged in to the data processing apparatus 20. In this case, the authentication code acquisition unit 1 acquires the transmitted authentication code (step S3).

Next, when login authentication of the user succeeds in the authentication server 22, the data execution unit 6 permits the user to log into the data execution environment 7 (step S4). Subsequently, the data execution unit 6 sets an identification code for use in the data execution environment 7 for the user (step S5).

Next, as illustrated in FIG. 4, the code management unit 2 manages the authentication code acquired in step S3 and the identification code set in step S5 in association with each other (step S6). Then, the processing is ended.

Subsequently, data execution processing by the data processing apparatus 20 will be described with reference to FIG. 7. FIG. 7 is a flowchart illustrating operations of the data processing apparatus 20 in the example embodiment at the time of execution of an application program.

First, as a premise, the user for which an identification code is set performs an operation for executing the application program via the reception unit 5, and the application program is executed in the data execution environment 7. At the time of reading out data stored in the storage 21, the application program executes a system call provided by the OS and adds the identification code to the system call.

As illustrated in FIG. 7, when the system call is made by the application program, the processing permission unit 4 hooks the system call and specifies the identification code related to execution of the system call (step S11). The processing permission unit 4 also passes the specified identification code to the code management unit 2.

In response, the code management unit 2 specifies the authentication code corresponding to the received identification code, from the data table that is managed, and passes the specified authentication code to the processing permission unit 4. The processing permission unit 4 thereby acquires the authentication code corresponding to the user who made the data access request (step S12).

Next, the processing permission unit 4 acquires the data name of the data to be read out by the application program, from the system call hooked in step S11 (step S13). The processing permission unit 4 then passes the acquired data name and authentication code to the determination unit 3.

Next, the determination unit 3 sends the authentication code to the authentication server 22 to specify the login name of the user who executed the application program (step S14). Specifically, the determination unit 3 sends the acquired authentication code to the authentication server 22. In response, the authentication server 22 sends the login name associated with the sent authentication code, and the determination unit 3 thus acquires the login name.

Next, the determination unit 3 determines whether the user who executed the application program has authorization to use the data to be processed (step S15). Specifically, the determination unit 3 refers to the data table in FIG. 5 and compares the data name corresponding to the specified login name with the data name received from the processing permission unit 4. If the two data names match each other, the determination unit 3 determines that the user who executed the application program has authorization to use the data.

If the user does not have authorization to use the data (step S15: NO), the data processing apparatus 20 executes processing for notifying that the user does not have authorization to use the data, and this processing is ended. On the other hand, if the user has authorization to use the data (step S15: YES), the determination unit 3 refers to the data table in FIG. 5 and specifies the decryption key corresponding to the login name and the data name. The determination unit 3 then sends the corresponding decryption key to the processing permission unit 4. Accordingly, the processing permission unit 4 decrypts the data with the decryption key and permits the user to process the data (step S16).

As described above, the data processing apparatus 20 according to the present example embodiment sets an authentication code for a user who has logged in and manages the user. The data processing apparatus 20 specifies the user who has made a request for access to data from the authentication code, determines whether the user has authorization to use the data, and permits the user to process the data. That is, even in the case where a third party uses the data processing apparatus 20, if an authentication code is not set for the third party the third party is treated as not having authorization to use the data, and he or she is not permitted to process the data. Accordingly, it is possible to eliminate the use of the data by a user who does not have use authorization.

If the data processing system 50 has a plurality of data processing apparatuses 20, a user with data use authorization can process data from any of the data processing apparatuses 20.

Further, each data processing apparatus 20 does not permit use of data in an application executed within the apparatus, but permits use of data when the user who has logged in has authorization to use the data. That is, the apparatus having the components described above with reference to FIG. 2 can safely protect the data for each user who logs in, without the need to prepare an application for protecting each piece of data to be used.

Since the user can handle data that he or she is authorized to use, simply by logging into the data processing apparatus 20, the user can use the data without being conscious of decryption of the protected (encrypted) data.

Since all data, including data that has been accessed by a user with use authorization, is decrypted each time the data is accessed, data does not remain as plain text. Thus, even if a third party without use authorization accesses the data, he or she cannot process the data and sufficient data protection can be performed.

In the present example embodiment, the authentication code has been described as a character string including an electronic signature. However, the authentication code may include information on a list of data that can be used by the user. In this case, the determination unit 3 can determine from the authentication code which data can be used by the specified user. In this case, the determination unit 3 does not need to manage the data table illustrated in FIG. 5.

The storage 21 storing the data may be provided in the data processing apparatus 20 or may be provided in the authentication server 22.

### [Program]

A program in the example embodiment is any program that causes a computer to execute steps S 1 to S6 illustrated in FIG. 6 and steps S 11 to S16 illustrated in FIG. 7. The data processing apparatus 20 and the data processing method in the present example embodiment can be realized, by installing the program in the computer and executing the installed program. In this case, the processor of the computer functions as the authentication code acquisition unit 1, the code management unit 2, the determination unit 3, the processing permission unit 4, the reception unit 5 and the data execution unit 6 to perform processing. The computer may be a general-purpose PC, a smartphone, or a tablet terminal device.

The program in the example embodiment may be executed by a computer system that is constructed of a plurality of computers. In this case, each computer may function as any of the authentication code acquisition unit 1, the code management unit 2, the determination unit 3, the processing permission unit 4, the reception unit 5 and the data execution unit 6.

### [Physical configuration]

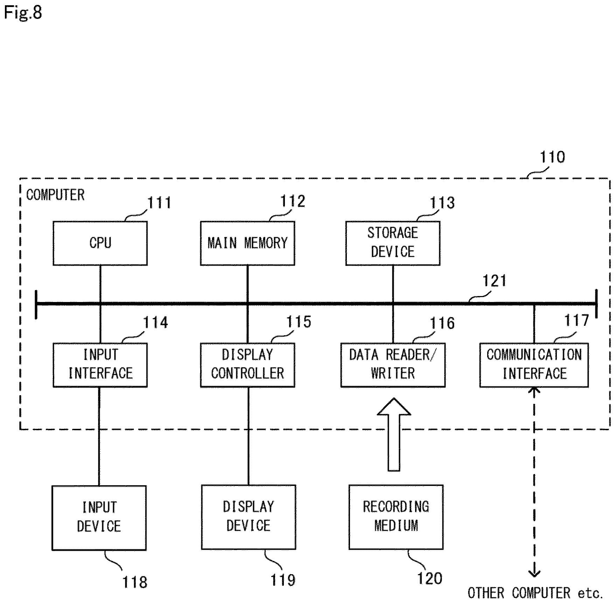

Using FIG. 8, the following describes a computer that realizes the data processing apparatus 20 by executing the program according to the example embodiment. FIG. 8 is a block diagram illustrating an example of a computer that realizes the data processing apparatus 20 according to the example embodiment.

As illustrated in FIG. 8, a computer 110 includes a CPU (Central Processing Unit) 111, a main memory 112, a storage device 113, an input interface 114, a display controller 115, a data reader/writer 116, and a communication interface 117. These components are connected in such a manner that they can perform data communication with one another via a bus 121.

The computer 110 may include a GPU (Graphics Processing Unit) or an FPGA (Field-Programmable Gate Array) in addition to the CPU 111, or in place of the CPU 111. In this case, the GPU or the FPGA can execute the program according to the example embodiment.

The CPU 111 deploys the program according to the example embodiment, which is composed of a code group stored in the storage device 113 to the main memory 112, and carries out various types of calculation by executing the codes in a predetermined order. The main memory 112 is typically a volatile storage device, such as a DRAM (dynamic random-access memory).

Also, the program according to the example embodiment is provided in a state where it is stored in a computer-readable recording medium 120. Note that the program according to the first and second example embodiment may be distributed over the Internet connected via the communication interface 117.

Also, specific examples of the storage device 113 include a hard disk drive and a semiconductor storage device, such as a flash memory. The input interface 114 mediates data transmission between the CPU 111 and an input device 118, such as a keyboard and a mouse. The display controller 115 is connected to a display device 119, and controls display on the display device 119.

The data reader/writer 116 mediates data transmission between the CPU 111 and the recording medium 120, reads out the program from the recording medium 120, and writes the result of processing in the computer 110 to the recording medium 120. The communication interface 117 mediates data transmission between the CPU 111 and another computer.

Specific examples of the recording medium 120 include: a general-purpose semiconductor storage device, such as CF (CompactFlash^{®}) and SD (Secure Digital); a magnetic recording medium, such as a flexible disk; and an optical recording medium, such as a CD-ROM (Compact Disk Read Only Memory).

Note that the data processing apparatus 20 according to the example embodiment can also be realized by using items of hardware, such as a circuit that respectively correspond to the components rather than the computer in which the program is installed. Furthermore, a part of data processing apparatus 200 may be realized by the program, and the remaining part of the data processing apparatus 20 may be realized by hardware.

A part or an entirety of the above-described example embodiment can be represented by (Supplementary Note 1) to (Supplementary Note 15) described below but is not limited to the description below.

### (Supplementary Note 1)

A data processing apparatus comprising:
an authentication code acquisition unit that acquires, when login authentication of a user who has performed a login operation succeeds, an authentication code associated with the user;
a code management unit that manage an identification code for identifying the user for which the login authentication succeeded and the authentication code in association with each other;
a determination unit that determines, when a request for access to data is made, based on whether there is an authentication code corresponding to the identification code of the user who made the request for access, whether the user corresponding to the authentication code has authorization to use the data; and
a processing permission unit that permits, if the user has been granted use authorization, processing of the data by the user.

### (Supplementary Note 2)

The data processing apparatus according to claim 1, wherein
the data is encrypted,
the determination unit further manages, for each piece of data, a decryption key for decrypting the data and a user who is able to use the data in association with each other, and
if the user has been granted use authorization, the processing permission unit acquires the decryption key corresponding to the user and decrypts the data with the decryption key.

### (Supplementary Note 3)

The data processing apparatus according to claim 1 or 2, wherein the authentication code acquired by the authentication code acquisition unit is generated at a predetermined time interval.

### (Supplementary Note 4)

The data processing apparatus according to claim 1, further comprising a data execution unit that sets, when the login authentication of the user succeeds, the identification code for the user, and, when the user for which the identification code is set requests execution of an application program, executes the application program, wherein
when execution of the application program is requested, the processing permission unit specifies the identification code of the user who made the request, acquires the authentication code corresponding to the specified identification code, and notifies data to be processed by the application program and the acquired authentication code to the determination unit, and
the determination unit determines whether the user associated with the authentication code has authorization to use the data to be processed by the application program.

### (Supplementary Note 5)

The data processing apparatus according to claim 4, wherein the determination unit manages a correspondence relationship between identification information of the data and the user who has authorization to use the data, and determines whether the user associated with the authentication code has authorization to use the data to be processed by the application program, based on the correspondence relationship.

### (Supplementary Note 6)

A data processing method comprising:
a step of acquiring, when login authentication of a user who has performed a login operation succeeds, an authentication code associated with the user;
a step of managing an identification code for identifying the user for which the login authentication succeeded and the authentication code in association with each other;
a step of determining, when a request for access to data is made, based on whether there is an authentication code corresponding to the identification code of the user who made the request for access, whether the user corresponding to the authentication code has authorization to use the data; and
a step of permitting, if the user has been granted use authorization, processing of the data by the user.

### (Supplementary Note 7)

The data processing method according to claim 6, wherein
the data is encrypted,
the step of determining of whether the user has authorization to use the data includes managing, for each piece of data, a decryption key for decrypting the data and a user who is able to use the data in association with each other, and
the step of permitting of processing of the data includes, if the user has been granted use authorization, acquiring the decryption key corresponding to the user and decrypting the data with the decryption key.

### (Supplementary Note 8)

The data processing method according to claim 6 or 7, wherein the authentication code acquired in the step of acquiring of the authentication code is generated at a predetermined time interval.

### (Supplementary Note 9)

The data processing method according to claim 6, further comprising:
a step of setting, when the login authentication of the user succeeds, the identification code for the user, and, when the user for which the identification code is set requests execution of an application program, executing the application program, wherein
the step of permitting of processing of the data includes, when execution of the application program is requested, specifying the identification code of the user who made the request, acquiring the authentication code corresponding to the specified identification code, and notifying data to be processed by the application program and the acquired authentication code, and
the step of determining of whether the user has authorization to use the data includes determining whether the user associated with the authentication code has authorization to use the data to be processed by the application program.

### (Supplementary Note 10)

The data processing method according to claim 9, wherein the step of determining of whether the user has authorization to use the data includes managing a correspondence relationship between identification information of the data and the user who has authorization to use the data, and determining whether the user associated with the authentication code has authorization to use the data to be processed by the application program, based on the correspondence relationship.

### (Supplementary Note 11)

A computer readable recording medium that includes a program recorded thereon, the program including instructions that causes a computer to carry out:
a step of acquiring, when login authentication of a user who has performed a login operation succeeds, an authentication code associated with the user;
a step of managing an identification code for identifying the user for which the login authentication succeeded and the authentication code in association with each other;
a step of determining, when a request for access to data is made, based on whether there is an authentication code corresponding to the identification code of the user who made the request for access, whether the user corresponding to the authentication code has authorization to use the data; and
a step of permitting, if the user has been granted use authorization, processing of the data by the user.

### (Supplementary Note 12)

The computer readable recording medium according to claim 11, wherein
the data is encrypted,
the step of determining of whether the user has authorization to use the data includes managing, for each piece of data, a decryption key for decrypting the data and a user who is able to use the data in association with each other, and
the step of permitting of processing of the data includes, if the user has been granted use authorization, acquiring the decryption key corresponding to the user and decrypting the data with the decryption key.

### (Supplementary Note 13)

The computer readable recording medium according to claim 11 or 12, wherein the authentication code acquired in the step of acquiring of the authentication code is generated at a predetermined time interval.

### (Supplementary Note 14)

The computer readable recording medium according to claim 11, the program further including instructions that causes the computer to carry out:
a step of setting, when the login authentication of the user succeeds, the identification code for the user, and, when the user for which the identification code is set requests execution of an application program, executing the application program, wherein
the step of permitting of processing of the data includes, when execution of the application program is requested, specifying the identification code of the user who made the request, acquiring the authentication code corresponding to the specified identification code, and notifying data to be processed by the application program and the acquired authentication code, and
the step of determining of whether the user has authorization to use the data includes determining whether the user associated with the authentication code has authorization to use the data to be processed by the application program.

### (Supplementary Note 15)

The computer readable recording medium according to claim 14, wherein the step of determining of whether the user has authorization to use the data includes managing a correspondence relationship between identification information of the data and the user who has authorization to use the data, and determining whether the user associated with the authentication code has authorization to use the data to be processed by the application program, based on the correspondence relationship.

Although the invention of the present application has been described above with reference to the example embodiment, the invention of the present application is not limited to the above-described example embodiment. Various changes that can be understood by a person skilled in the art within the scope of the invention of the present application can be made to the configuration and the details of the invention of the present application.

This application is based upon and claims the benefit of priority from Japanese application No. 2021-186328 filed on November 16, 2021, the disclosure of which is incorporated herein in its entirety by reference.

### INDUSTRIAL APPLICABILITY

The data processing apparatus according to the present disclosure can allow only user with data use authorization to process data. The data processing apparatus according to the present disclosure can be used in a system that safely handles data for each user.

### REFERENCE SIGNS LIST

- 1: Authentication code acquisition unit
- 2: Code management unit
- 3: Determination unit
- 4: Processing permission unit
- 5: Reception unit
- 6: Data execution unit
- 20: Data processing apparatus
- 20A: Data execution environment
- 21: Storage
- 22: Authentication server
- 50: Data processing system
- 110: Computer
- 111: CPU
- 112: Main memory
- 113: Storage device
- 114: Input interface
- 115: Display controller
- 116: Data reader/writer
- 117: Communication interface
- 118: Input device
- 119: Display device
- 120: Recording medium
- 121: Bus

## Claims

1. A data processing apparatus comprising:
an authentication code acquisition means for, when login authentication of a user who has performed a login operation succeeds, acquiring an authentication code associated with the user;
a code management means for managing an identification code for identifying the user for which the login authentication succeeded and the authentication code in association with each other;
a determination means for, when a request for access to data is made, determining, based on whether there is an authentication code corresponding to the identification code of the user who made the request for access, whether the user corresponding to the authentication code has authorization to use the data; and
a processing permission means for, if the user has been granted use authorization, permitting processing of the data by the user.

2. The data processing apparatus according to claim 1, wherein
the data is encrypted,
the determination means further manages, for each piece of data, a decryption key for decrypting the data and a user who is able to use the data in association with each other, and
if the user has been granted use authorization, the processing permission means acquires the decryption key corresponding to the user and decrypts the data with the decryption key.

3. The data processing apparatus according to claim 1 or 2, wherein the authentication code acquired by the authentication code acquisition means is generated at a predetermined time interval.

4. The data processing apparatus according to claim 1, further comprising a data execution means for, when the login authentication of the user succeeds, setting the identification code for the user, and, when the user for which the identification code is set requests execution of an application program, executing the application program, wherein
when execution of the application program is requested, the processing permission means specifies the identification code of the user who made the request, acquires the authentication code corresponding to the specified identification code, and notifies data to be processed by the application program and the acquired authentication code to the determination means, and
the determination means determines whether the user associated with the authentication code has authorization to use the data to be processed by the application program.

5. The data processing apparatus according to claim 4, wherein the determination means manages a correspondence relationship between identification information of the data and the user who has authorization to use the data, and determines whether the user associated with the authentication code has authorization to use the data to be processed by the application program, based on the correspondence relationship.

6. A data processing method comprising:
when login authentication of a user who has performed a login operation succeeds, acquiring an authentication code associated with the user;
managing an identification code for identifying the user for which the login authentication succeeded and the authentication code in association with each other;
when a request for access to data is made, determining, based on whether there is an authentication code corresponding to the identification code of the user who made the request for access, whether the user corresponding to the authentication code has authorization to use the data; and
if the user has been granted use authorization, permitting processing of the data by the user.

7. The data processing method according to claim 6, wherein
the data is encrypted,
the determining of whether the user has authorization to use the data includes managing, for each piece of data, a decryption key for decrypting the data and a user who is able to use the data in association with each other, and
the permitting of processing of the data includes, if the user has been granted use authorization, acquiring the decryption key corresponding to the user and decrypting the data with the decryption key.

8. The data processing method according to claim 6 or 7, wherein the authentication code acquired in the acquiring of the authentication code is generated at a predetermined time interval.

9. The data processing method according to claim 6, further comprising:
when the login authentication of the user succeeds, setting the identification code for the user, and, when the user for which the identification code is set requests execution of an application program, executing the application program, wherein
the permitting of processing of the data includes, when execution of the application program is requested, specifying the identification code of the user who made the request, acquiring the authentication code corresponding to the specified identification code, and notifying data to be processed by the application program and the acquired authentication code, and
the determining of whether the user has authorization to use the data includes determining whether the user associated with the authentication code has authorization to use the data to be processed by the application program.

10. The data processing method according to claim 9, wherein the determining of whether the user has authorization to use the data includes managing a correspondence relationship between identification information of the data and the user who has authorization to use the data, and determining whether the user associated with the authentication code has authorization to use the data to be processed by the application program, based on the correspondence relationship.

11. A computer readable recording medium that includes a program recorded thereon, the program including instructions that causes a computer to carry out:
when login authentication of a user who has performed a login operation succeeds, acquiring an authentication code associated with the user;
managing an identification code for identifying the user for which the login authentication succeeded and the authentication code in association with each other;
when a request for access to data is made, determining, based on whether there is an authentication code corresponding to the identification code of the user who made the request for access, whether the user corresponding to the authentication code has authorization to use the data; and
if the user has been granted use authorization, permitting processing of the data by the user.

12. The computer readable recording medium according to claim 11, wherein
the data is encrypted,
the determining of whether the user has authorization to use the data includes managing, for each piece of data, a decryption key for decrypting the data and a user who is able to use the data in association with each other, and
the permitting of processing of the data includes, if the user has been granted use authorization, acquiring the decryption key corresponding to the user and decrypting the data with the decryption key.

13. The computer readable recording medium according to claim 11 or 12, wherein the authentication code acquired in the acquiring of the authentication code is generated at a predetermined time interval.

14. The computer readable recording medium according to claim 11, the program further including instructions that causes the computer to carry out:
when the login authentication of the user succeeds, setting the identification code for the user, and, when the user for which the identification code is set requests execution of an application program, executing the application program, wherein
the permitting of processing of the data includes, when execution of the application program is requested, specifying the identification code of the user who made the request, acquiring the authentication code corresponding to the specified identification code, and notifying data to be processed by the application program and the acquired authentication code, and
the determining of whether the user has authorization to use the data includes determining whether the user associated with the authentication code has authorization to use the data to be processed by the application program.

15. The computer readable recording medium according to claim 14, wherein the determining of whether the user has authorization to use the data includes managing a correspondence relationship between identification information of the data and the user who has authorization to use the data, and determining whether the user associated with the authentication code has authorization to use the data to be processed by the application program, based on the correspondence relationship.
